(19) **Europäisches Patentamt / European Patent Office / Office européen des brevets**

(11) **EP 4 269 944 A1**

(12) # EUROPÄISCHE PATENTANMELDUNG

(43) Veröffentlichungstag:
**01.11.2023  Patentblatt 2023/44**

(21) Anmeldenummer: **23168480.4**

(22) Anmeldetag: **18.04.2023**

(51) Internationale Patentklassifikation (IPC):
**G01C 19/58** *(2006.01)*    **G01P 15/08** *(2006.01)*

(52) Gemeinsame Patentklassifikation (CPC):
**G01C 19/58; G01P 15/08**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **19.04.2022  DE 102022109438**

(71) Anmelder: **Gottfried Wilhelm Leibniz Universität Hannover**
**30167 Hannover (DE)**

(72) Erfinder:
• **Tennstedt, Benjamin**
  **30167 Hannover (DE)**
• **Schön, Prof. Dr. Steffen**
  **30167 Hannover (DE)**

(74) Vertreter: **Günther, Constantin**
**Meissner Bolte Patentanwälte**
**Rechtsanwälte Partnerschaft mbB**
**Plathnerstraße 3A**
**30175 Hannover (DE)**

(54) **VERFAHREN UND VORRICHTUNG ZUR INERTIALEN SENSORISCHEN MESSUNG SOWIE COMPUTERPROGRAMM**

(57)    Die Erfindung betrifft ein Verfahren zur inertialen sensorischen Messung wenigstens einer Beschleunigung und/oder einer Drehrate mittels einer mechanisch gekoppelten Anordnung aus wenigstens einem Atominterferometer und wenigstens einer konventionellen Inertialmesseinheit, wobei ein bei einem Messvorgang bestimmter Messwert des Atominterferometers, der mehreren unterschiedlichen Phasenlagen in verschiedenen Fringe-Intervallen zugeordnet werden kann, durch Abgleich mit wenigstens einem bei dem Messvorgang bestimmten Messwert der konventionellen Inertialmesseinheit dem tatsächlichen Fringe-Intervall zugeordnet wird. Die Erfindung betrifft außerdem ein Computerprogramm zur Durchführung des Verfahrens sowie eine entsprechende Vorrichtung dafür.

EP 4 269 944 A1

Fig. 3

**Beschreibung**

Die Erfindung betrifft ein Verfahren zur inertialen sensorischen Messung wenigstens einer Beschleunigung und/oder einer Drehrate mittels einer mechanisch gekoppelten Anordnung aus wenigstens einem Atominterferometer und wenigstens einer konventionellen Inertialmesseinheit, wobei ein bei einem Messvorgang bestimmter Messwert des Atominterferometers, der mehreren unterschiedlichen Phasenlagen in verschiedenen Fringe-Intervallen zugeordnet werden kann, durch Abgleich mit wenigstens einem bei dem Messvorgang bestimmten Messwert der konventionellen Inertialmesseinheit dem tatsächlichen Fringe-Intervall zugeordnet wird. Die Erfindung betrifft außerdem ein Computerprogramm zur Durchführung des Verfahrens sowie eine entsprechende Vorrichtung dafür.

Atominterferometer als inertiale Sensoren zur Messung von Beschleunigungen und Drehraten bieten bei konstanten Signalen eine überlegene Sensitivität und Langzeitstabilität gegenüber konventionellen Inertialmesseinheiten. Eine Studie von Jekeli [2005] hat eine horizontale Drift der Position von 5 m in einer Stunde Navigation bei idealen Bedingungen prognostiziert.

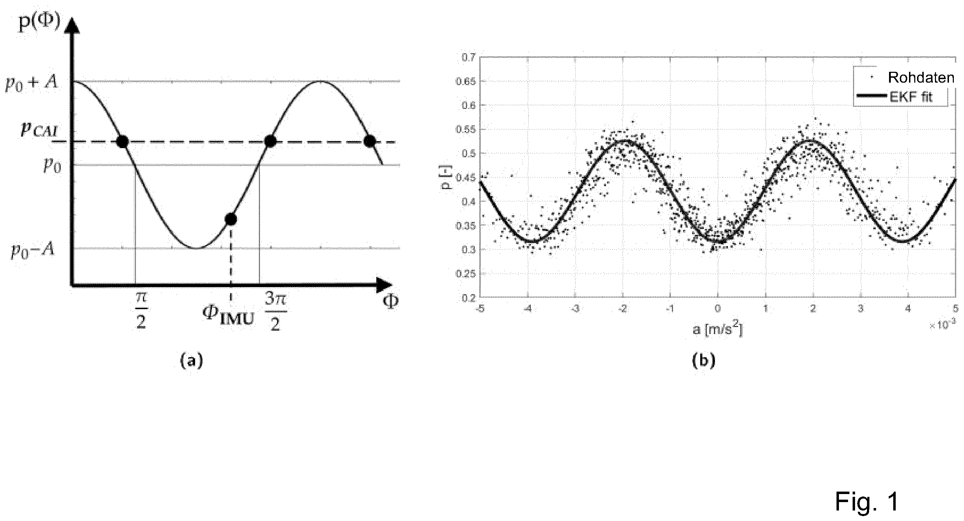

Wechselnde Dynamiken und mechanische Vibrationen der Optik machen jedoch die Kopplung mit einer konventionellen Inertialmesseinheit erforderlich, da sonst der begrenzte Dynamikbereich des Atominterferometers überschritten wird, was zu Mehrdeutigkeiten der Lösung und Kontrastverlust führt, vgl. Fig. 1.

In Fig. 1 zeigt die Abbildung (a), dass die Messung des Atominterferometers $p_{CAI}$ (gestrichelte horizontale Linie) mehreren Phasenwerten in verschiedenen Fringe-Intervallen, d.h. die Flanke des Kosinus z.B. im Bereich [0, $\pi$], zugeordnet werden kann und nicht eindeutig ist. Die Prädiktion der Phase über eine konventionelle Inertialmesseinheit (IMU) (gestrichelte vertikale Linie) kann diese Mehrdeutigkeit lösen. Eine konventionelle IMU, nachfolgend auch kurz IMU genannt, kann zum Beispiel opto-mechanische Sensoren haben.

Fig. 1 Abbildung (b) stellt die Messung eines Atominterferometers bei mechanischen Vibrationen dar (Rohdaten-Punktwolke). Werden die Punkte gefiltert, ergibt sich der dargestellte sinusförmige Verlauf (EKF fit). Die X-Achse der Punkte wurde durch Korrelation mit der Messung eines optomechanischen Resonators gewonnen (vgl. Richardson et al. [2020]). Die Parameter der Kosinuskurve können im Anschluss z.B. über eine Ausgleichung nach der Methode der kleinsten Fehlerquadrate ermittelt werden. Im Gegensatz zur Abbildung (a) wird auf der X-Achse hier die Beschleunigung anstelle der Phase abgetragen. Vereinfacht lassen sich die beiden Größen über den Skalenfaktor $\frac{1}{4}k_{eff}T_f^{\,2}$ ineinander überführen ($k_{eff}$ effektive Wellenzahl, Tf Atom-Flugzeit), wenn von einer konstanten Beschleunigung ausgegangen wird. Die korrekte Umrechnung ist z.B. in Antoine and Borde [2003] dargestellt.

Dabei gibt es zwei zentrale Probleme, bei denen eine Hybridisierung sinnvoll und notwendig ist. Dies ist zum ersten die Korrektur von Vibrationen der Laseroptik des Atominterferometers, bei denen z.B. die Signale opto-mechanischer Sensoren der konventionellen IMU mit denen des Atominterferometers korreliert werden, um die Mehrdeutigkeit zu lösen (Richardson et al. [2020]). Eine Prototyp-Messung mit ähnlicher Strategie wurde in Geiger [2011] im Rahmen eines Parabelfluges, also unter zero-g-Bedingungen, durchgeführt.

Ein weiteres Problem ist die Beschleunigung des Fahrzeugrahmens bzgl. eines Zielsystems, welche in den meisten terrestrischen Anwendungen die Abdeckung eines großen Dynamikbereiches erforderlich macht, die das Atominterferometer allein nicht bewältigen kann. Hier geht es also nicht mehr um das technische Rauschen in Null-Gravitation, sondern um die Auswertung tatsächlicher Beschleunigungen relativ zum Zielsystem. Dies ist auch die zugrundeliegende technische Aufgabe für den hier vorgestellten Algorithmus.

Eine mögliche Lösung hierfür wird von Cheiney et al. [2018] vorgeschlagen, in dem die Kopplung im Rahmen eines linearisierten Kalman-Filters durchgeführt wird. Das Signal der konventionellen IMU wird dabei zur Ermittlung des Zielintervalles verwendet, wobei die gemessenen Beschleunigungen in die entsprechende Phasenverschiebung umgerechnet werden, sodass eine Kopplung der Signale beider Sensoren innerhalb eines linearisierten Bereiches möglich ist. In der Veröffentlichung werden allerdings konstante Signale während der Interrogationszeit der Atome angenommen, was auch dem durchgeführten statischen Experiment entspricht. Effekte wie Coning, das eine Änderung der Orientierung des Zielsystems während der Integrationszeit beschreibt, und Sculling, das eine zwischenzeitliche Änderung des Beschleunigungssignals umfasst, werden dabei nicht berücksichtigt. Weiterhin wird in der Arbeit nicht erwähnt, dass die Differenz zwischen der durch die IMU prädizierten Phase und der gemessenen Phase des Atominterferometers nicht größer gleich 2 sein darf, da sonst das Fringe-Intervall überschritten und die Mehrdeutigkeit der Phase nicht aufgelöst werden kann. Dieses Überschreiten des Bereiches ist jedoch für die meisten Sensoren niederer Klasse, wie MEMS, die Regel. Auch bei IMUs höherer Genauigkeitsklasse können zufällige Offsets durch Temperatureffekte entstehen, die weit über dem Dynamikbereich des Atominterferometers liegen. Aufgrund dieser Probleme ist eine auf Atominterferometrie basierte Inertialnavigation in terrestrischen Anwendungen in den meisten Fällen bisher unmöglich, abgesehen von der Nutzung des Atominterferometers als stabilisiertes Gravimeter, vgl. iXAtom [2017].

In Tennstedt and Schön [2020] wird die Idee der Hybridisierung erneut aufgegriffen und ein Error-State Extended Kalman Filter Framework entwickelt, mit welchem weiterhin auch die Berücksichtigung der Drehraten möglich ist, wenn beispielsweise ein Paar antiparallel ausgerichteter Atominterferometer für jede Achse eingesetzt wird (vgl. auch Gauguet et al. [2009]). Hierdurch ist die Unterscheidung von Coriolis- und Beschleunigungsanteilen der gemessenen Phasenverschiebung und auch die Korrektur von Biases der konventionellen Gyroskope möglich. Allerdings wird auch hier davon ausgegangen, dass ein konstantes Signal während des Messintervalles und der Atom-Flugzeit wirkt. Dies führt dazu, dass schnell variierende Signale weiterhin nicht korrekt aufgelöst werden können und eine Konvergenz des Filters in diesen Fällen nicht gewährleistet ist.

Zur Verbesserung der zeitlichen Auflösung des Signals wird in Tennstedt and Schön [2021] ein Algorithmus vorgestellt, bei dem die Position und Geschwindigkeit der Atome im Koordinatensystem des Atominterferometers basierend auf den Daten der IMU prädiziert wird. Die Phasenverschiebung wird schließlich über die Summe der Atom-Laser Interaktionen berechnet, bei denen die relative Position der Atome im Laserfeld berücksichtigt wird. Dies ermöglicht eine genauere Modellierung des Signals. In Simulationen terrestrischer Anwendungen mit schnellen Wechseln der Dynamik konnte eine deutliche Verbesserung der Filterlösung erreicht, und auch in hochdynamischen Fällen eine Schätzung des Bias-Zustandes ermöglicht werden. Während der Totzeiten des Atominterferometers (Vorbereitung der Atome und Ausleseprozess) werden die über die geschätzten Biases korrigierten Signale der konventionellen IMU verwendet. Die in dieser Veröffentlichung gezeigten Techniken sind eine wesentliche Voraussetzung für den hier vorgeschlagenen Algorithmus, wie noch gezeigt wird.

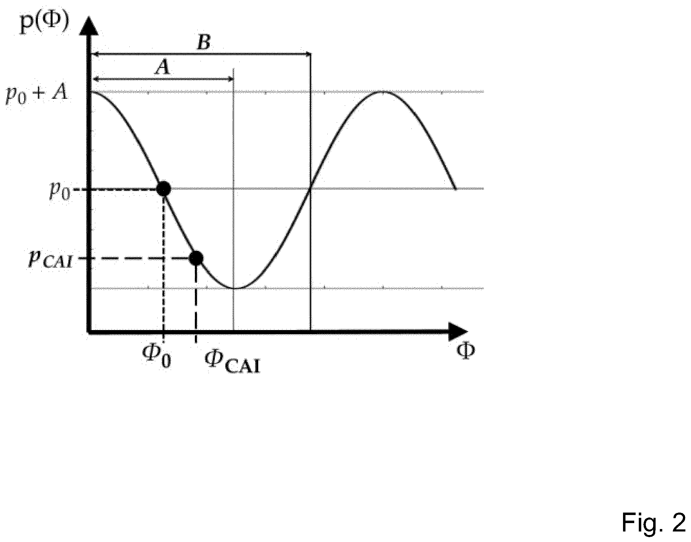

Ein Problem besteht nach wie vor: da die Daten der konventionellen IMU als Steuergröße verwendet werden,

$$\frac{\pi}{2}$$

darf der Unterschied der prädizierten Phase und der Messung des Atominterferometers nie größer gleich $\frac{\pi}{2}$ , bzw. $\pi$ in Error-State Formulierung sein, vgl. Fig. 2. Ist die Abweichung in Folge von systematischem Bias und integriertem Rauschen der konventionellen IMU-Daten zu groß, so wird die Fringe-Mehrdeutigkeit nicht aufgelöst und dadurch ein zusätzlicher Fehler eingeführt, der zur Divergenz der Filterlösung führt.

Der Erfindung liegt die Aufgabe zugrunde, Lösungsmöglichkeiten für diese Problematik aufzuzeigen.

Diese Aufgabe wird bei einem Verfahren der eingangs genannten Art dadurch gelöst, dass die Interrogationszeit des Atominterferometers von einem Messvorgang zu einem anderen Messvorgang in Abhängigkeit wenigstens eines automatisch bestimmten Parameters automatisch verändert wird. Dies hat den Vorteil, dass das Verfahren zu einer zuverlässigen Auflösung der Fringe-Mehrdeutigkeit führt. Dabei kann das Verfahren in einem autarken System ausgeführt werden, d.h. ohne Kopplung zu anderen Systemen wie z.B. GNSS-Systemen. Mit heute verfügbaren Rechenleistungen kann das Verfahren ohne weiteres in Echtzeit mit der erforderlichen Datenrate für inertiale sensorische Messungen durchgeführt werden, z.B. für Navigationsanwendungen.

Die konventionelle IMU kann als einachsige oder mehrachsige IMU ausgebildet sein. Die konventionelle IMU weist wenigstens einen Beschleunigungssensor auf, kann aber auch mehrere Beschleunigungssensoren aufweisen. Die konventionelle IMU kann zusätzlich einen oder mehrere Drehratensensoren (Gyroskope) aufweisen, z.B. zur Stützung der Messung oder zur Nutzung der Signale für andere kinematische Einsatzfälle.

Vorteilhafter Weise sind das Atominterferometer und die konventionelle IMU mit einer ausreichenden Steifigkeit miteinander mechanisch gekoppelt, sodass auch bei dynamischen Belastungen beide Arten von Sensoren den gleichen Bewegungsgrößen unterliegen. Das Atominterferometer kann insbesondere als Cold Atom Interferometer ausgebildet sein.

Gemäß einer vorteilhaften Ausgestaltung der Erfindung ist vorgesehen, dass

- die Interrogationszeit des Atominterferometers
  und/oder
- die Messgenauigkeit des Atominterferometers durch die automatische Veränderung der Interrogationszeit

bis zu einem Wert maximiert wird, bei dem durch den Abgleich mit dem wenigstens einen Messwert der konventionellen Inertialmesseinheit eine Zuordnung zum tatsächlichen Fringe-Intervall durchführbar ist. Dies hat den Vorteil, dass die zu erreichende Präzision der Filterlösung in jedem Fall maximal gehalten wird (stets maximale Interrogationszeit) und zugleich die Lösung der Fringe-Mehrdeutigkeit garantiert wird.

Gemäß einer vorteilhaften Ausgestaltung der Erfindung ist vorgesehen, dass als automatisch bestimmter Parameter für die automatische Veränderung der Interrogationszeit ein Bias-Signal und/oder ein Bias-Fehler verwendet wird.

Dementsprechend kann vorteilhafter Weise die automatische Veränderung der Interrogationszeit von dem Bias, d.h. dem Unterschied zwischen den Messwerten der konventionellen IMU und den Messwerten des Atominterferometers, verändert werden. Alternativ oder zusätzlich kann auch der Bias-Fehler verwendet werden, der sozusagen automatisch in einem Filter zur Filterung des Bias-Signals bestimmt wird, z.B. in einem Extended Kalman Filter (EKF).

Beispielsweise kann der Bias-Fehler im sogenannten Error-State eines EKF verwendet werden. Auf diese Weise können Größen für die Beeinflussung der Interrogationszeit des Atominterferometers verwendet werden, die bei einem solchen Hybrid-Sensorsystem ohnehin berechnet werden müssen. Als automatisch bestimmter Parameter für die automatische Veränderung der Interrogationszeit kann insbesondere eine betragsmäßige Größe verwendet werden, zum Beispiel der Betrag des Bias-Signals und/oder Bias-Fehlers.

Gemäß einer vorteilhaften Ausgestaltung der Erfindung ist vorgesehen, dass das Bias-Signal oder der Bias-Fehler unter Verwendung eines Error-State Extended Kalman Filters bestimmt wird. Dies erlaubt eine sehr effiziente und präzise Echtzeit-Filterung der Signale.

Gemäß einer vorteilhaften Ausgestaltung der Erfindung ist vorgesehen, dass die Interrogationszeit automatisch erhöht wird, wenn der automatisch bestimmte Parameter oder dessen Betrag einen ersten Grenzwert unterschreitet. Durch den ersten Grenzwert kann, gegebenenfalls in Kombination mit dem nachfolgend erläuterten zweiten Grenzwert, ein gewisser Hysteresebereich geschaffen werden, innerhalb dessen die Interrogationszeit konstant gehalten wird. Erst bei Über- bzw. Unterschreiten eines Grenzwertes erfolgt eine automatische Anpassung der Interrogationszeit.

Gemäß einer vorteilhaften Ausgestaltung der Erfindung ist vorgesehen, dass der erste Grenzwert anhand der Rauschdichte der Messwerte der konventionellen Inertialmesseinheit bestimmt wird. Der erste Grenzwert kann insbesondere anhand der weißen Rauschdichte der Messwerte der konventionellen IMU bestimmt werden, z.B. in einem Wertebereich von 1/10 bis 1/20 der weißen Rauschdichte.

Gemäß einer vorteilhaften Ausgestaltung der Erfindung ist vorgesehen, dass die Interrogationszeit automatisch verringert wird, wenn der automatisch bestimmte Parameter oder dessen Betrag einen zweiten Grenzwert überschreitet.

Gemäß einer vorteilhaften Ausgestaltung der Erfindung ist vorgesehen, dass der zweite Grenzwert anhand des maximal durch ein Fringe-Intervall abdeckbaren Dynamikbereichs bestimmt wird. Hierdurch wird sichergestellt, dass die Fringe-Mehrdeutigkeit zuverlässig aufgelöst wird.

Die Signale des Atominterferometers und die Signale der konventionellen IMU können z.B. durch ein Extended Kalman Filter verarbeitet werden, insbesondere ein Error-State Extended Kalman Filter.

Das Verfahren kann auf unterschiedliche Arten durch ein technisches System ausgeführt werden. Beispielsweise kann das Verfahren als Computerprogramm realisiert werden, z.B. als Zustandsautomat. Das Verfahren kann auch als softwaremäßiger Regler (im Sinne der Regelungstechnik) realisiert werden. Alternativ kann das Verfahren auch als Hardware-Regler realisiert werden.

Die eingangs genannte Aufgabe wird außerdem gelöst durch ein Computerprogramm mit Programmcodemitteln, die auf einem maschinenlesbaren Träger gespeichert sind, eingerichtet zur Durchführung des Verfahrens der zuvor erläuterten Art, wenn das Computerprogramm auf einem Rechner ausgeführt wird. Auch hierdurch können die zuvor erläuterten Vorteile realisiert werden.

Die eingangs genannte Aufgabe wird außerdem gelöst durch eine Vorrichtung zur intertialen sensorischen Messung wenigstens einer Beschleunigung und/oder einer Drehrate, aufweisend eine mechanisch gekoppelte Anordnung aus wenigstens einem Atominterferometer und wenigstens einer konventionellen Inertialmesseinheit, und mit einer Steuereinheit, die zur Durchführung des Verfahrens der zuvor erläuterten Art eingerichtet ist. Auch hierdurch können die zuvor erläuterten Vorteile realisiert werden. Die Steuereinheit kann einen Rechner und ein Computerprogramm aufweisen, z.B. in einem Speicher der Steuereinheit, wobei der Rechner zur Ausführung des Computerprogramms eingerichtet sein kann. Die Steuereinheit kann das erfindungsgemäße Verfahren auch durch Hardware-Komponenten realisieren, z.B. durch einen in Hardware aufgebauten Regler.

Das hier vorgestellte Verfahren ist in der Lage, auch bei größeren Ungenauigkeiten der IMU (z.B. in der MEMS-Genauigkeitsklasse) eine Konvergenz des Filters auf den korrekten Bias-Zustand zu ermöglichen und folglich eine durch Atominterferometrie gestützte Navigationslösung mit erheblicher Präzisionssteigerung zu gewährleisten. Dies war bisher nicht möglich.

Die Basis für die Lösung ist eine Kopplung des Atominterferometers mit einer konventionellen IMU mit der Annahme, dass der Einfluss von Vibrationen auf die Messungen durch eine stabilisierte Plattform oder Korrelationen mit optomechanischen Sensoren (Richardson et al. [2020]) unterdrückt wird.

Wie in Tennstedt and Schön [2021] beschrieben, kann mit einem Error-State Extended Kalman Filter Framework gearbeitet werden, deren Gleichungen hinreichend in der Literatur aufgeführt und hier nicht wiederholt werden. Im Folgenden werden nur die zur weiteren Erklärung relevanten Formeln zusammengefasst.

Dabei gelten folgende Definitionen:

CAI (cold atom interferometer) Durch Manipulation sich räumlich ausbreitender kalter Atome mittels gezielter Laserpulse lassen sich Aussagen über Beschleunigungen und Drehraten des Sensorrahmens treffen.

IMU (inertial measurement unit), hier auch als konventionelle Inertialmesseinheit oder konventionelle IMU bezeichnet. Sie enthält konventionelle Sensorik, z.B. ausgestattet mit je drei Beschleunigungsmessern und Gyroskopen auf den drei Raumachsen.

| MEMS-IMU | (micro-electomechanical system) Inertialmesseinheit bei der sowohl die Beschleunigungen und Drehraten elektromechanisch erfasst werden. Zeichnet sich oft durch besonders günstigen Preis und minimale Größe, aber geringere Genauigkeit aus. |
| --- | --- |
| EKF | (extended Kalman filter) Ein mathematisches Werkzeug zur Lösung von Optimierungsproblemen im Zustandsraum. Basierend auf Modellen des Systems, sowie der Sensoren und ihrer Messgrößen (=Beobachtungen) können bestimmte Parameter und Variablen (=Zustände) optimal berechnet werden. "Optimal" ist dabei die Zustandsrückführung beim Filterschritt über einen aus dem stochastischen Modell ermittelten Verstärkungsfaktor (Kalman Gain). Das "Extended" steht dabei weiterhin für die Möglichkeit der Verwendung nichtlinearer System- und Beobachtungsgleichungen, im Gegensatz zum "linearisierten" Kalman Filter. Die Messmatrix H (Sensitivität des Beobachtungsmodelles bzgl. der Zustände) muss für das stochastische Modell auch hier linearisiert werden, was zu Ungenauigkeiten der Modelle führen kann. |
| Error-State EKF | Statt der absoluten Zustände wie im EKF werden hier die Änderung der Zustände von einem Filterschritt auf den nächsten betrachtet. Dies verbessert in der Regel die Genauigkeit des Filters aufgrund geringerer Linearisierungsfehler im stochastischen Modell, da die Distanz zum Linearisierungspunkt geringer ist als bei Verwendung absoluter Zustände. |
| Bias | Einer der Zustände des Modelles. Steht hier z.B. für den Unterschied der Messung eines konventionellen Beschleunigungssensors und der Messung des CAI. |
| Bias-Fehler | Änderung des Bias (Error State) von einem Fehlerschritt zum nächsten, gemäß der Error-State EKF Definition. "Fehler" im Sinne von Abweichung der aktuellen Filter-Schätzung vom bisher ermittelten Zustand. |

Ausschlaggebend für die vorgestellte Strategie ist die Nutzung der konventionellen IMU als Hauptsensor, weshalb durch die hohe Datenrate ein wesentlich größerer Anteil der Dynamiken zur Berechnung der Navigationslösung verwendet werden kann. Das hier eingeführte Verfahren dient dabei der Lösung eines verbleibenden Problems, namentlich die zu große Abweichung der Signale beider Sensoren infolge des Bias, zu lösen. Damit können die Daten der konventionellen IMU adäquat korrigiert und die Fringe-Mehrdeutigkeit zu jeder Zeit gelöst werden.

Zur Vereinfachung wird der Zustandsvektor für eine einzelne Raumachse betrachtet, $X = [v^b, b_a]$. Auf die Verallgemeinerung auf drei Dimensionen wird später kurz eingegangen, dies ist problemlos möglich. Die Gleichung für die Atompopulation p am Ausgang des Atominterferometers lautet:

$$p = A \cos\big(\phi_{IMU} + \phi_L + \phi_{b_a}\big) + p_0 = A \cos\Big(\tfrac{\pi}{2} + \tfrac{1}{4} k_{eff} T_f^2 b_a\Big) + p_0 \quad (5.1)$$

Mit Amplitude A, Offset $p_0$, effektiver Laserwellenzahl $k_{eff}$. Die entsprechende Jacobimatrix als Ableitung der Gleichung nach dem Zustandsvektor ist muss hier nicht vollständig berechnet werden, da die Ableitung nach der Geschwindigkeit $v^b$ in diesem Modellansatz null ist. Die entsprechende Ableitung nach dem Beschleunigungs-Bias $b_a$ ist hingegen:

$$H = \frac{\partial p}{\partial b_a}$$

$$= -\frac{1}{4} A k_{eff} T_f^2 \sin(\phi_0)$$

$$= -\frac{1}{4} A k_{eff} T_f^2$$

$$(5.2)$$

mit Tf als freie Flugzeit der Atome, welche der doppelten Interrogationszeit zwischen den Laserpulsen entspricht (beide Begriffe werden weiterhin parallel geführt).

Angemerkt sei hier, dass die elektronisch gesteuerte Laserphase $\varphi_L$ derart reguliert wird, dass in Summe mit

$$\phi_0 = \phi_{IMU} + \phi_L = \frac{\pi}{2}$$

der IMU-Phase $\varphi_{IMU}$ die mid-fringe Position bei gehalten wird. Der bei der äußeren Ableitung

entstehende Term $\sin(\frac{\pi}{2})$ kann deshalb direkt als konstanter Faktor 1 geführt werden. Die Pulsdauer wird dabei vernachlässigt. Das ist die Länge der Laser-Pulse, die maßgeblich für die Beschreibung der Rabi-Oszillation zwischen den beiden Atomzuständen ist, aber für die hier genutzte Abstraktionsebene nicht nötig ist.

Wie in den Messgleichungen zu sehen, hängt die Sensitivität im Wesentlichen vom Quadrat der Atom-Flugzeit Tf ab. Unter diesem Gesichtspunkt ist eine Maximierung dieser Zeit anzustreben, um die maximale Präzision der berechneten Navigationslösung zu erreichen.

Die Messung des CAI liegt als Zählung der Atome im angeregten Zustand vor, welche die Übergangswahrscheinlichkeit $p_{CAI}$ repräsentiert. Das Modell für eine simulierte Messung kann dabei z.B. wie folgt angesetzt werden:

$$p_{CAI} = A\cos(\phi_{true} + \phi_L) + p_0$$

$$(5.3)$$

Die Laserphase $\varphi_L$ wird entsprechend der Regelung auch hier berücksichtigt. Die Parameter A und $p_0$ der Gleichungen (5.1) und (5.3) werden als Konstante gesehen. Sie sind für kurze Zeiten stabil (z.B. 180 s, vgl. Berg [2014]). Im realen Betrieb müssen sie im regelmäßigen Abstand mit einem gleitenden Fenster entsprechender Länge über die vergangenen Messungen neu geschätzt und aufdatiert werden, vgl. Fig. 1 (b). Angemerkt sei außerdem, dass die die eigentliche Zielgröße enthaltende Phase $\phi_{b_a}$ in dem Fall nicht gemeinsam mit den anderen Parametern geschätzt wird, sondern stattdessen über die Sensitivität des Filters im Kalman Gain K ermittelt wird, siehe Gl. 5.4. Dies ist notwendig, da die Phase im Gegensatz zu A, $p_0$ ständiger Veränderung unterliegt.

$$\delta b_a = K(p_{CAI} - h(b_a))$$
$$= K(p_{CAI} - p)$$

$$(5.4)$$

Wie in der Gleichung zu sehen, wurde der prädizierte Fehlerzustand des Bias dabei zu null gesetzt, sodass $\delta b_a$ direkt aus der mit K gewichteten Differenz der CAI Messung und dem durch das Systemmodell und die IMU Daten prädizierte p bestimmt werden kann.

Der maximale durch ein Fringe-Intervall abdeckbare Dynamikbereich, in dem folglich der Fehler $\delta b_a$ zwischen der gesteuerten Phase und dem prädizierten Wert eindeutig zugeordnet werden kann, ergibt sich zu:

$$\delta b_{a,max} = \pm\frac{2\pi}{k_{eff} \cdot T_f^2}$$

$$(5.5)$$

und entspricht einer Flanke der Kosinus-Funktion, vgl. Fig. 2. Solange die Differenz in diesem Bereich liegt, ist auch das Update des Kalman-Filters korrekt. Korrekt insofern, dass zunächst von eventuellen Linearisierungsfehlern bei der Berechnung der H-Matrix abgesehen wird, was hauptsächlich die Berechnung der Zustands-Kovarianzen betrifft.

Die Fig. 2 zeigt eine Darstellung des Dynamikbereiches. Der Bereich A (relativ $\pm\frac{1}{2}\pi$ zu $\varphi_0$) stellt die maximale Abweichung der über die IMU prädizierten Phase $\varphi_0$ und des entsprechenden Cal-Messwertes $\varphi_{CAI}$ dar, in der noch eine korrekte Filterkorrektur erfolgen kann. Der Bereich B (relativ $\pm\pi$ zu $\varphi_0$) markiert das Intervall, in dem eine Konvergenz des Error-State Filters zwar durch das korrekte Vorzeichen der Abweichung noch möglich ist, die Korrektur jedoch, zumindest in diesem Filterschritt, noch nicht den richtigen Wert besitzt.

Im Error-State EKF besteht die Besonderheit, dass die mögliche Abweichung in einem größeren Bereich bis ausschließlich $\pm\pi$ liegen darf. Auch wenn das Filter-Update in diesem Schritt keinen korrekten Wert liefert (das maximale Update $\delta b_{a,max}$ ist auch hier entsprechend Gleichung 5.5 begrenzt), so stimmt die Richtung der Änderung aber überein. Das Error-State EKF könnte also selbst beim Überschreiten des Dynamikbereiches noch innerhalb weniger Iterationen konvergieren.

In der weiteren Beschreibung ist mit Dynamikbereichen ausschließlich der Bereich A in Fig. 2 gemeint.

Es sein angenommen, der Bias-Fehler liegt zu Beginn außerhalb dieses Dynamikbereiches. Um den Bias mit dem Filter im richtigen Zielintervall verfolgen zu können, muss der Dynamikbereich erweitert werden. Dies kann effektiv über eine Reduzierung der Atom-Flugzeit Tf realisiert werden. Allgemein würde es in der ersten Iteration sogar Sinn machen, mit der minimal möglichen Atomflugzeit zu beginnen, um sicherzustellen, dass ein beliebiger realistischer Bias noch immer innerhalb des Dynamikbereiches liegt.

Nach diesem ersten Filterschritt wird der verbleibende Fehler des Bias Zustandes $\delta b_a$ schon deutlich reduziert sein. Falls diese verbleibende Abweichung klein genug ist, konkreter gesagt: unter einem bestimmten Grenzwert $\theta_{in}$, kann die Flugzeit wieder erhöht werden sofern sichergestellt ist, dass der dann reduzierte Dynamikbereich die Bias-Abweichung noch immer deckt.

Diese Prozedur kann nun wiederholt werden, bis die maximal technisch realisierbare Atom-Flugzeit erreicht wird. Diese ist im Wesentlichen von der Breite der Interrogationslaser oder den Abmessungen der Interferometriekammer begrenzt und daher ein leicht zu bestimmender Parameter.

Falls sich der Bias im späteren Verlauf sprunghaft ändern sollte und eine erneute Anpassung des Dynamikbereiches erforderlich ist, kann diese dann über eine Reduktion der Atom-Flugzeit realisiert werden, sofern eine bestimmte Bedingung $\theta_{out}$ erfüllt wird.

Der Algorithmus dient in erster Linie der Schätzung des zufälligen Bias, der in der Regel mit jedem Start des Gerätes wechselt und insbesondere von thermischen Effekten abhängt. Die Modellierung erfolgt meist im Rahmen eines Markov-Prozesses erster Ordnung.

Das erfindungsgemäße Verfahren kann auf unterschiedliche Arten in einem Computerprogramm realisiert werden. Vorteilhaft ist beispielsweise die Realisierung als Zustandsautomat. Wie zuvor erwähnt, kann das Verfahren aber auch in Form eines Reglers realisiert werden, wahlweise als softwaremäßiger Regler (Computerprogramm) oder als Hardware-Regler.

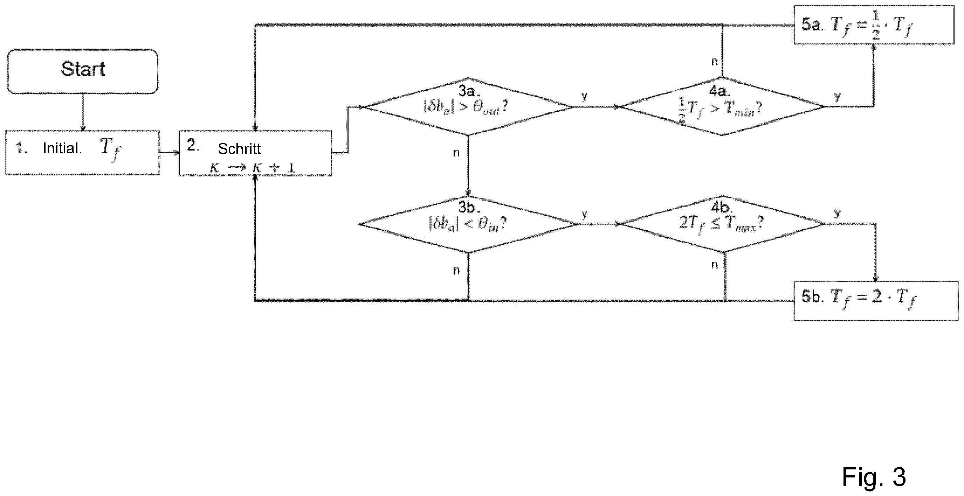

Ein Beispiel für einen Zustandsautomaten des vorgeschlagenen Algorithmus zur Lösung ist in Fig. 3 dargestellt. Das Verfahren beginnt nach dem Start mit dem Schritt 1, in dem die Flugzeit Tf auf einen Anfangswert initialisiert wird. Danach wird mit dem Schritt 2 in einer Endlos-Programmschleife fortgefahren. Auf den Schritt 2 folgt ein Programmschritt 3a. In diesem wird der Betrag des Bias $\delta b_a$ mit einem ersten Grenzwert verglichen. Überschreitet der Bias betragsweise diesen ersten Grenzwert, wird mit dem Programmschritt 4a fortgefahren. Andernfalls wird zum Programmschritt 3b verzweigt.

Im Programmschritt 4a wird geprüft, ob die Flugzeit noch weiter verringert werden darf. Im hier dargestellten Ausführungsbeispiel erfolgt die automatische Verringerung oder Erhöhung der Flugzeit immer mit dem Faktor ½ bzw. 2. Daher wird in diesem Beispiel im Schritt 4a geprüft, ob die Flugzeit im Falle einer weiteren Halbierung noch größer ist als die minimal zulässige Flugzeit. Wenn dies der Fall ist, wird zum Schritt 5a verzweigt. Im Schritt 5a wird die Flugzeit auf die Hälfte verringert. Andernfalls wird nicht zum Schritt 5a verzweigt, sondern direkt vom Schritt 4a wieder zum Schritt 2.

Sofern vom Schritt 3a zum Schritt 3b verzweigt wurde, wird dort im Schritt 3b geprüft, ob der Bias betragsmäßig kleiner ist als ein zweiter Grenzwert. Wenn dies nicht der Fall ist, wird wieder zum Schritt 2 verzweigt. Andernfalls wird zum Schritt 4b verzweigt.

Im Schritt 4b wird geprüft, ob die Flugzeit noch weiter erhöht werden darf. Im dargestellten Ausführungsbeispiel erfolgt die Erhöhung der Flugzeit immer um den Faktor 2, daher wird im Schritt 4b geprüft, ob das Doppelte der derzeitigen Flugzeit kleiner oder gleich der maximal zulässigen Flugzeit ist. Wenn dies der Fall ist, wird zum Schritt 5b verzweigt. Im Schritt 5b wird die Flugzeit verdoppelt. Andernfalls wird vom Schritt 4b direkt zum Schritt 2 verzweigt.

Der hier verwendete Faktor 2 bzw. ½ zur Anpassung der Flugzeit kann auch anders gewählt werden. Dabei müssen die Faktoren für die Erhöhung und Verringerung der Flugzeit nicht zwangsläufig symmetrisch gewählt sein, d.h. Kehrwerte voneinander sein. Statt der beschriebenen Änderung der Flugzeit durch Multiplikation mit einem Faktor kann auch die Addition eines Werts erfolgen, oder eine komplexere Berechnung, die additive, multiplikative und/oder andere Variationen der Flugzeit beinhalten kann.

In dem dargestellten Beispiel wurde zur automatischen Anpassung der Interrogationszeit die Flugzeit verändert. Es ist natürlich auch möglich, in einem vergleichbaren Algorithmus direkt die Interrogationszeit zu verändern.

Die Bezeichnungen für die Grenzwerte $\theta_{in}$ und $\theta_{out}$ stellen den Zoom in oder aus der Region um den zuletzt geschätzten Bias-Wert dar, was vorteilhaft die Funktionsweise des Algorithmus ist.

Die initiale Atomflugzeit $T_{f,0}$ kann z.B. auf den kleinstmöglichen Wert gesetzt werden, z.B. auf 0.004 s. Dies entspricht dem doppelten IMU-Messintervall bei einer Datenrate von 500 Hz (0.002 s). Die restlichen Parameter, insbesondere die Grenzwerte $\theta_{in}$ und $\theta_{out}$, werden nun nacheinander erläutert.

Der Grenzwert $\theta_{in}$ für eine Vergrößerung der Flugzeit Tf sollte in Relation zur Varianz des Beschleunigungssignals ($\sigma_a^2$ der konventionellen IMU stehen. Dieses ist wiederum abhängig von der Filterzeit, hier gleich der Atom-Flugzeit Tf, da die Beschleunigungssignale effektiv während dieser Zeit gemittelt werden.

$$\theta_{in} \sim \sqrt{\sigma_a^2(T_f)} \qquad (5.6)$$

Da sich die möglichen Einstellungen für Tf einem endlichen Set zuordnen lassen, z.B. Tf ε [0.004, 0.008, 0.016, 0.032, 0.064] (in Sekunden), ist grundsätzlich eine Lookup-Tabelle denkbar, in der die jeweiligen Zeiten den Varianzen zugeordnet werden. Die Varianzen können dabei durch eine Allan-Varianz Analyse der statischen Beschleunigungsdaten im Vorfeld bestimmt werden.

In den meisten kinematischen Applikationen ist die maximale Tf allerdings eher begrenzt, und der Rauschprozess sollte sich vorwiegend im Bereich weißen Rauschens mit der Varianz $\sigma_w^2$ bei einem zuvor festgelegten $T_{f,0}$ bewegen. Die zugehörige Varianz des Ausgabeprozesses folgt der zeitabhängigen Relation:

$$\sigma_a^2 = \sigma_w^2 \frac{T_{f,0}}{T_f} \qquad (5.7)$$

Der Wert $\theta_{in}$ skaliert also mit:

$$\theta_{in} \sim \sqrt{\sigma_w^2} \cdot \sqrt{\frac{T_{f,0}}{T_f}} \qquad (5.8)$$

Oder, falls die Grenze $\theta_{in,0}$ für die Zeit $T_{f,0}$ definiert wurde und eine rekursive Darstellung gewünscht ist:

$$\theta_{in,k} = \frac{1}{\sqrt{2}} \cdot \theta_{in,k-1}, \quad when \quad T_{f,k} = 2T_{f,k-1} \qquad (5.9)$$

$$\theta_{in,k} = \sqrt{2} \cdot \theta_{in,k-1}, \quad when \quad T_{f,k} = \frac{1}{2}T_{f,k-1} \qquad (5.10)$$

Vorteilhaft ist es, den Grenzwert $\theta_{in}$ als einen Bruchteil der weißen Rauschdichte der IMU-Beschleunigungssignale zu definieren. In dem Fall wird die Transition von Schritt 3b zu Schritt 4b in Fig. 3 nur noch mit einer gewissen Wahrscheinlichkeit aktiviert, was mehrere aufeinanderfolgende Transitionen nahezu ausschließt. Ein Wert von $\frac{1}{10}$ bis $\frac{1}{20}$ der Standardabweichung des (diskreten) weißen Rauschprozesses liefert dabei vernünftige Resultate. Die Umrechnungen in 5.10 sind in dem Fall immer noch gültig.

Der Grenzwert $\theta_{in}$ kann also wie folgt konkretisiert werden:

$$\theta_{in} = \kappa_{in}\sigma_a \qquad (5.11)$$

mit $\kappa_{in} \leq \frac{1}{10}$.

Für die Transition von Schritt 3a zu Schritt 4a in Fig. 3 ist eine andere Bedingung vorteilhaft. Hier bietet sich der Dynamikbereich als Referenz an, da dieser die eigentliche Limitation für die mögliche Größe des Restfehlers $\delta b_a$

darstellt.

Der Grenzwert wird hier als die Hälfte des Betrages des Dynamikbereiches definiert:

$$\theta_{out} = \kappa_{out} \left\| \frac{2\pi}{k_{eff} \cdot T_f^2} \right\|$$

(5.12)

$$\text{mit } \kappa_{out} = \frac{1}{2} \,.$$

Die soeben aufgeführten Einstellungen erlauben es dem Zustandsautomaten, sich an beliebige Abweichungen des Biases anzupassen, z.B. infolge plötzlicher Temperaturänderungen, da er in dem Fall automatisch zu einer geringeren Tf wechselt und sich das System so stabilisiert.

Der Algorithmus wird nun mit den CAI-Parametern $k_{eff} = 1 \cdot 10^{-7}$ [$rad \cdot m^{-1}$] und $T_{f,0} = 0.004$ [s] evaluiert. Die IMU-Daten werden mit 500 Hz generiert. Der bereits vorgestellte Algorithmus wird dabei unter der Voraussetzung einer vollständigen Kompensation der (Erd-) Drehraten ausgeführt. Dies ermöglicht eine isolierte Betrachtung der Bestimmung des Beschleunigungsbias auf einer Achse. In der Realität kann dies über die Nutzung eines High-End Gyroskopes zur Drehratenmessung ermöglicht werden, oder wie zu Beginn aufgeführt über die Nutzung zweier antiparallel ausgerichteter Atominterferometer pro Achse.

Ein simuliertes Beschleunigungs-Signal $a_{in}$ wird wie folgt modelliert, um ein fehlerbehaftetes IMU Ausgangs-Signal $a_{out}$ zu erhalten:

$$a_{out} = a_{in} + b_a + b_{ar} + b_{aw}$$

(5.13)

mit einem konstanten Beschleunigungs-Bias $b_a$ von 0.02 m/s², dem aus einer Normalverteilung mit $\sigma_{aw}^2 = 5 \cdot 10^{-3}[m/s^2]^2$ gesampelten $b_{aw}$, sowie dem autoregressiven Prozess erster Ordnung $b_{ar}$, welcher wie folgt modelliert ist:

$$b_{ar,k} = exp\left\{\frac{\Delta t}{\tau_c}\right\} b_{ar,k-1} + n, \qquad n \sim N(0, \sigma_{ar}^2)$$

(5.14)

mit $\sigma_{ar}^2 = 2 \cdot 10^{-5} m/s^2$, Korrelationszeit $\tau_c = 0.001$ s und der IMU Datenrate $\Delta t$.

Für jedes Experiment werden drei Diagramme erzeugt.

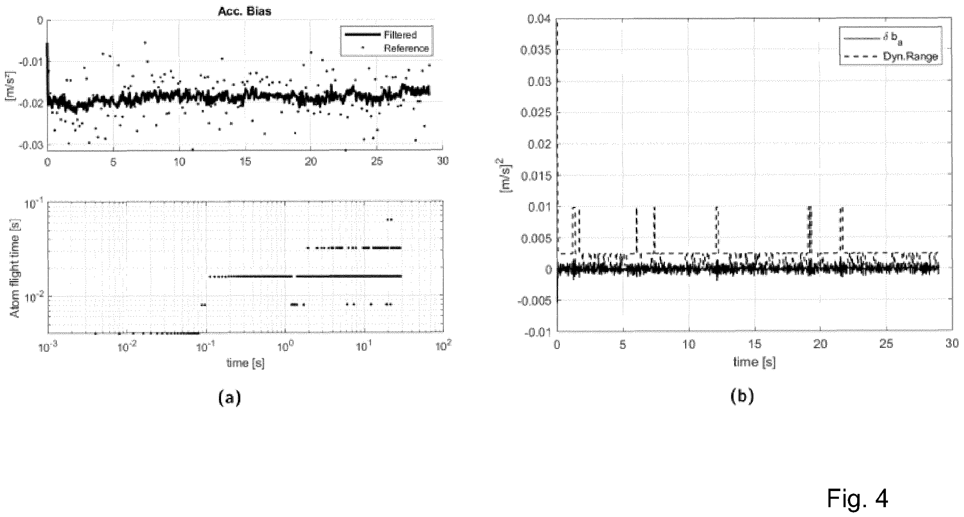

Die Fig. 4 zeigt ein Beispiel mit simulierten Beschleunigungsdaten.

    (a) oben: Referenz und gefilterter Bias-Wert,
    (a) unten: Atom-Flugzeit bzgl. des aktuellen Filter-Zeitstempels;
    (b) Fehlerzustand des Beschleunigungs-Bias und Grenzwerte.

Der Bias-Zustand kann stets verfolgt werden. Anzumerken sei, dass in den längeren Atomflugzeiten auch das IMU-Signal länger gemittelt wird, was wiederum die weißen Rauschanteile reduziert. Sobald der Drift des Biasfehlers wieder steigt, passt sich der Automat entsprechend an (z.B. t=19 s oder t=22 s in Fig. 4(b)).

Die Fig. 4(a) zeigt eine zweigeteilte Abbildung, nämlich im oberen Teil die Gegenüberstellung vom IMU-Referenzsignal und dem gefilterten Signal. Der untere Teil stellt dabei die aktuelle Filterzeit der dabei gültigen Einstellung der Atomflugzeit gegenüber, was Aufschluss über die interne Zustandseinstellung des Automaten gibt.

Die Fig. 4(b) stellt den gefilterten Fehlerzustand $\delta b_a$ über der Zeit dar. Zusätzlich werden hier die Grenzwerte $\theta_{in}$, welcher nur einen sehr schmalen Bereich nahe 0 m/s² darstellt, sowie der Dynamikbereich zu jeder Zeit dargestellt. Letzterer stellt den Grenzwert $2 \cdot \theta_{out}$ dar.

Nachfolgend werden Beispiele mit realen IMU-Daten erläutert.

Die IMU-Beschleunigungsdaten aus dem Beispiel zuvor wurden unter Annahme allgemeiner IMU-Rauschmodelle mit aus realen Messreihen gewonnen Parametern generiert. Der Schritt zur Applikation des Algorithmus mit realen IMU Daten ist daher nicht allzu groß.

Ein Unterschied besteht jedoch: Da nun kein Referenzsignal vorliegt, wird davon ausgegangen dass im Stillstand keine Beschleunigung in Richtung der horizontalen Raumachsen vorliegt. Die künstliche Referenz ist daher eine Beschleunigung mit dem Wert 0, welche zur Berechnung des simulierten Atominterferometer-Signals verwendet wird. Tatsächliche Signale, die nicht primär aus dem weißen Rauschen der IMU stammen, z.B. Vibrationen, sind dennoch vorhanden. Im realen Fall würde das Atominterferometer diese ebenso registrieren, sodass keine zusätzliche Abweichung entsteht. Hier jedoch werden die Signale vom Filter als zusätzliche Fehlereffekte mit im Bias der IMU aufgefangen und können so zu einer größeren Abweichung führen als im realen Anwendungsfall üblich.

Statische Messdaten von vier konventionellen IMUs unterschiedlicher Genauigkeitsklassen werden nun zur Verifizierung des Algorithmus verwendet. Eine low-cost IMU (XSens), eine tactical grade MEMS IMU (LORD microStrain), eine navigation grade MEMS IMU (iMAR FSAS), sowie eine mit Servo-Beschleunigungsmessern ausgestattete High-End IMU (iNAT RQT).

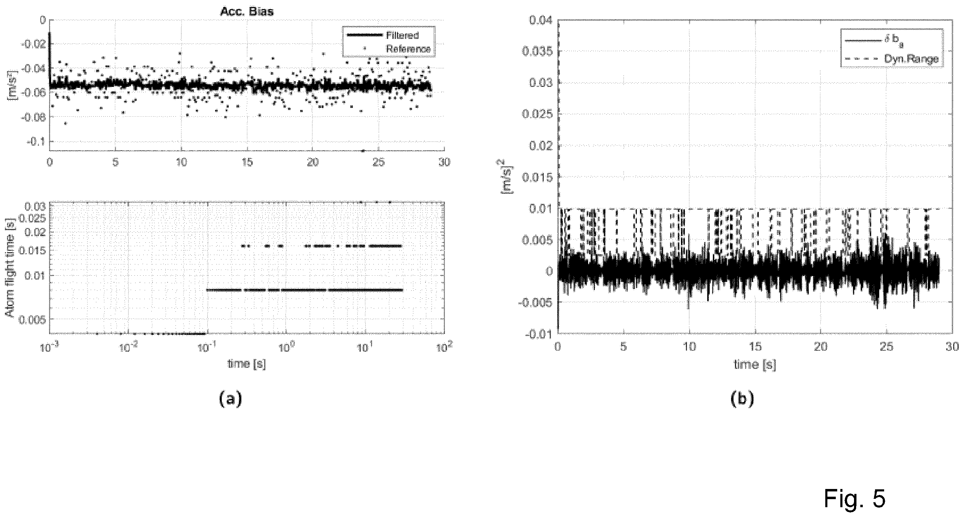

Fig. 5: XSens MEMS Accelerometer. (a) oben: Referenz und gefilterter Bias-Wert, unten: Atom-Flugzeit bzgl. des aktuellen Filter-Zeitstempels; (b) Fehlerzustand des Beschleunigungs-Bias und Grenzwerte. Das weiße Rauschen ist hier erheblich stärker. Höhere Interrogationszeiten werden durch die größere Drift des Biasfehlers kaum gehalten.

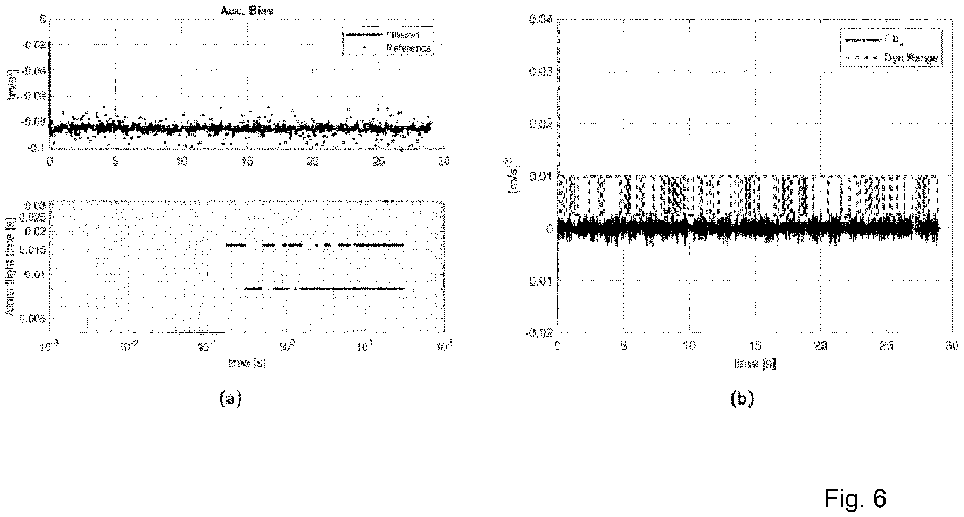

Fig. 6: Microstrain MEMS Accelerometer. (a) oben: Referenz und gefilterter Bias-Wert, unten: Atom-Flugzeit bzgl. des aktuellen Filter-Zeitstempels; (b) Fehlerzustand des Beschleunigungs-Bias und Grenzwerte. Ähnliche Ergebnisse wie die XSens IMU, wobei hier öfters höhere Atomflugzeiten gehalten werden können.

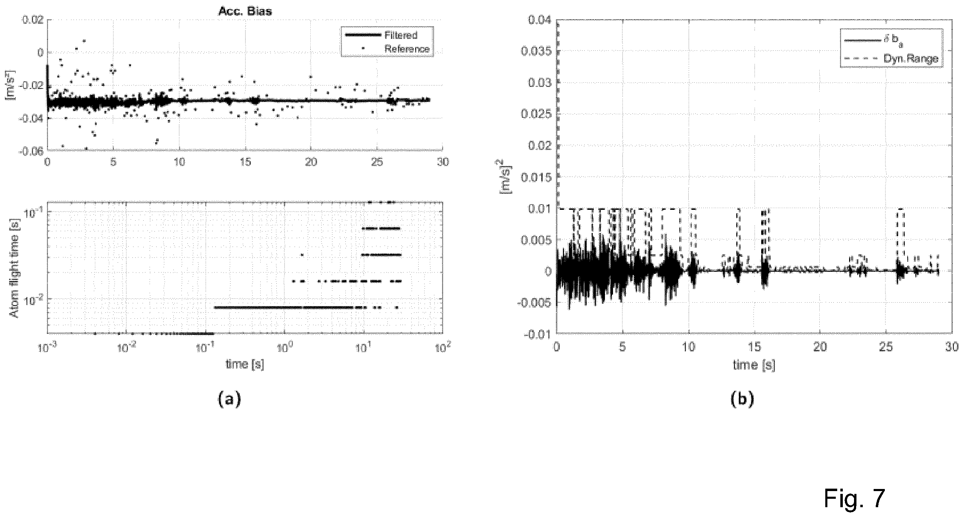

Fig. 7: iMAR FSAS MEMS Accelerometer. (a) oben: Referenz und gefilterter Bias-Wert, unten: Atom-Flugzeit bzgl. des aktuellen Filter-Zeitstempels; (b) Fehlerzustand des Beschleunigungs-Bias und Grenzwerte. Im Gegensatz zu den low-cost Sensoren wird hier eine längere Phase mit großer Atomflugzeit gehalten, in welcher das weiße Rauschen des Bias-Signals deutlich reduziert wird (z.B. Sekunden 16-22).

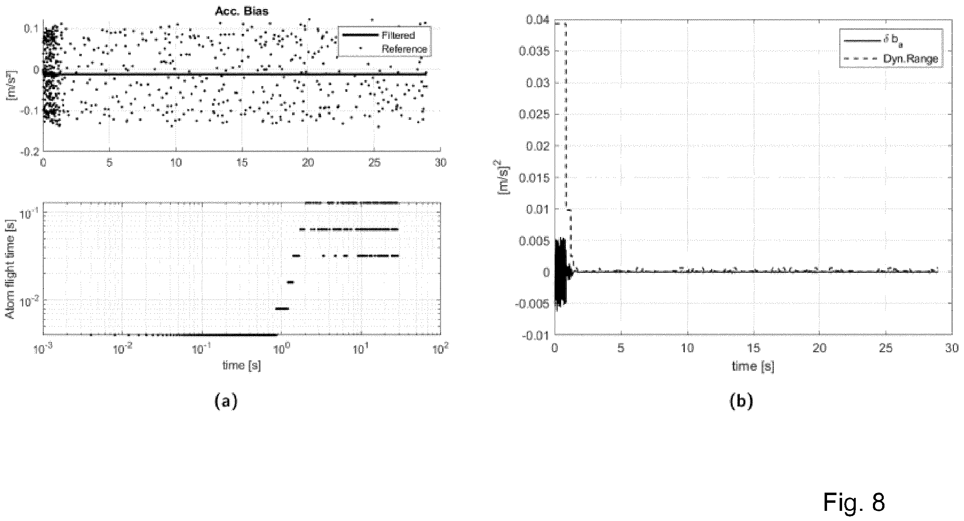

Fig. 8: iMAR iNAT RQT Servo Accelerometer. (a) oben: Referenz und gefilterter Bias-Wert. Die Schwankungen des Signals stammen vom Dithering der Ringlaser-Gyroskope das ebenfalls einen Einfluss auf die Beschleunigungs-Messung hat. Dies stört die Funktion des Algorithmus jedoch nicht; unten: Atom-Flugzeit bzgl. des aktuellen Filter-Zeitstempels; (b) Fehlerzustand des Beschleunigungs-Bias und Grenzwerte.

Die Hoch-Achse der Koordinatensysteme der Sensoren sind dabei nicht zwangsläufig parallel zum Schwerevektor ausgerichtet. Daher ist ein kleiner Alignment-Fehler in den Beschleunigungs-Signalen vorhanden. Dieser Fehler wirkt jedoch nur als konstanter Bias auf das Signal und ist nicht weiter problematisch. In jedem Experiment wird der Einfachheit halber die Beschleunigungs-Messung auf der X-Achse des jeweiligen Sensors verwendet.

Abgesehen von der iMAR FSAS IMU wurden alle Sensordaten mit 500Hz aufgenommen. Die FSAS Daten haben eine initiale Datenrate von 200Hz und wurden künstlich mit Zeitstempeln entsprechend einer 500Hz Messung versehen. Dies sollte keine Probleme darstellen, da sich die Filterraten im Bereich des weißen Rauschens befinden. Auf eine Skalierung der Amplitude nicht-weißer Prozesse in diesem Datensatz entsprechend der Zeitstempel-Anpassung wird daher weiterhin verzichtet, da deren Betrag weit unter dem der weißen Rauschdichte liegt. Die Verwendung einer geringeren Datenrate wäre hingegen problematisch, da die Atom-Flugzeit mindestens doppelt so groß wie die Zeit zwischen zwei Atom-Flugzeiten sein sollte, bzw. mindestens der Interrogationszeit entsprechen muss. Eine Interpolation der IMU-Daten zur Erhöhung der Datenrate würde hingegen unnötige Korrelationen zwischen den Datenpunkten einführen, welche die auf unkorrelierte weiße Rauschprozesse ausgelegte Einstellungen der Transitionen des Automaten negativ beeinflussen könnten.

Die Funktionsfähigkeit des Algorithmus konnte für die realen Messdaten aller vier IMUs nachgewiesen werden. Besonders für den Servo-Beschleunigungsmesser der iNAT RQT (vgl. Fig. 8) kann der Zustandsautomat nach kurzer Einlaufphase von etwa 1 Sekunde für längere Zeitspannen die größtmögliche Atomflugzeit aufrecht erhalten. Für die low-cost XSens MEMS IMU (vgl. Fig. 5) verbleibt der Automat nach kurzer Konvergenzzeit von 0.1 Sekunden auf einem relativ stabilen Wert der Atomflugzeit von 0.008 Sekunden, was bereits einer enormen Genauigkeitssteigerung entspricht.

Für eine 3D CAI Architektur mit antiparallel ausgerichteten Atominterferometern auf jeder Achse (vgl. Tennstedt and Schön [2021]) kann der Algorithmus auch zur Bestimmung der Biases von Beschleunigungsmessern und Gyroskopen aller drei Raumachsen erweitert werden, wenn jede Raumachse dabei durch einen eigenen Zustandsautomaten oder Regler überwacht wird. Die Messgleichung und die entsprechende H-Matrix 5.2 muss dabei noch um den Coriolis-Term ergänzt werden.

Die $\theta_{in}$ Transitionen für Gyroskope und Beschleunigungsmesser auf jeder Achse sollten dabei über ein logisches UND gekoppelt werden. Das wiederum verlangt nach einer Anpassung der Berechnung für den Grenzwert, da die Wahrscheinlichkeit zur Aktivierung der Transition für eine Erhöhung der Atomflugzeit sonst eine quadratische Reduktion erfahren würde. Ein vorteilhafter Ansatz ist es, die Grenzwerte so zu gestalten, dass ihr Produkt dem zuvor definierten

Wert $\kappa_{in}$ für entweder die Gyro- oder Beschleunigungsrauschdichten entspricht, also $\kappa_{in,a} = \sqrt{\kappa_{in}}$ und

$\kappa_{in,g} = \sqrt{\kappa_{in}}$. Die Bedingungen für $\theta_{out}$ beider Fehlergrößen hingegen sollten über ein logisches ODER gekoppelt werden um zu vermeiden, dass einer der beiden Biases entsprechend der zuvor beschriebenen Problematik auf einem irreversiblen Wert konvergiert.

Literatur:

C. Antoine and C.J. Borde. Quantum theory of atomic clocks and gravito-inertial sensors: an update. Journal of Optics B: Quantum and Semiclassical Optics, 2003.

Peter Berg. Ein rauscharmes Materiewellen-Gyroskop hoher Genauigkeit. PhD thesis, Gottfried Wilhelm Leibniz Universität Hannover, Fakultät für Mathematik und Physik, 2014.

Pierrick Cheiney, Lauriane Fouché, Simon Templier, Fabien Napolitano, Baptiste Battelier, Philippe Bouyer, and Brynle Barrett. Navigation-compatible hybrid quantum accelerometer using a kalman filter. Physical Review Applied, 10(3), sep 2018. doi: 10.1103/physrevapplied.10.034030.

A. Gauguet, B. Canuel, T. Lévéque, W. Chaibi, and A. Landragin. Characterization and limits of a cold-atom sagnac interferometer. Physical Review A, 80(6), dec 2009. doi: 10.1103/physreva.80.063604.

R. Geiger. Senseur inertiel à ondes dè matière aéroporté. PhD thesis, Univ Paris Sud, 2011.

iXAtom, 2017. URL https:/lwww.coldatomsbordeaux.org/ixatom.

Chrisopher Jekeli. Navigation error analysis of atom interferometer inertial sensor. Navigation, 52(1):1-14, mar 2005. doi: 10.1002/j.2161-4296.2005.tb01726.x.

L.L. Richardson et al. Optomechanical resonator-enhanced atom interferometry. Commun. Phys., 3:208, 2020. doi: 10.1038/542005-020-00473-4.

Benjamin Tennstedt and Steffen Schön. Integration of atom interferometers and inertial measurement units to improve navigation performance. In 28th Saint Petersburg International Conference on Integrated Navigation Systems (IC/NS), 31.05.-02.06.2021, St. Petersburg, Russia, Piscataway, NJ, 2021. IEEE. https://doiorg/10.23919/ICINS43216.2021.9470809.

Benjamin Tennstedt and Steffen Schön. Dedicated calculation strategy for atom interferometry sensors in inertial navigation. pages 755-764, Portland, OR, USA, 2020. IEEE. ISBN 978-1-7281-9446-2. doi: 10.1109/PLAN846316.2020.9110142.

**Patentansprüche**

1. Verfahren zur inertialen sensorischen Messung wenigstens einer Beschleunigung und/oder einer Drehrate mittels einer mechanisch gekoppelten Anordnung aus wenigstens einem Atominterferometer und wenigstens einer konventionellen Inertialmesseinheit, wobei ein bei einem Messvorgang bestimmter Messwert des Atominterferometers, der mehreren unterschiedlichen Phasenlagen in verschiedenen Fringe-Intervallen zugeordnet werden kann, durch Abgleich mit wenigstens einem bei dem Messvorgang bestimmten Messwert der konventionellen Inertialmesseinheit dem tatsächlichen Fringe-Intervall zugeordnet wird, **dadurch gekennzeichnet, dass** die Interrogationszeit des Atominterferometers von einem Messvorgang zu einem anderen Messvorgang in Abhängigkeit wenigstens eines automatisch bestimmten Parameters automatisch verändert wird.

2. Verfahren nach Anspruch 1, **dadurch gekennzeichnet, dass**

   - die Interrogationszeit des Atominterferometers
   und/oder
   - die Messgenauigkeit des Atominterferometers durch die automatische Veränderung der Interrogationszeit

   bis zu einem Wert maximiert wird, bei dem durch den Abgleich mit wenigstens einem Messwert der konventionellen Inertialmesseinheit eine Zuordnung zum tatsächlichen Fringe-Intervall durchführbar ist.

3. Verfahren nach einem der vorhergehenden Ansprüche, **dadurch gekennzeichnet, dass** als automatisch bestimmter Parameter für die automatische Veränderung der Interrogationszeit ein Bias-Signal und/oder ein Bias-Fehler verwendet wird.

4. Verfahren nach Anspruch 3, **dadurch gekennzeichnet, dass** das Bias-Signal oder der Bias-Fehler unter Verwendung eines Error-State Extended Kalman Filters bestimmt wird.

5. Verfahren nach einem der vorhergehenden Ansprüche, **dadurch gekennzeichnet, dass** die Interrogationszeit automatisch erhöht wird, wenn der automatisch bestimmte Parameter oder dessen Betrag einen ersten Grenzwert unterschreitet.

6. Verfahren nach Anspruch 5, **dadurch gekennzeichnet, dass** der erste Grenzwert anhand der Rauschdichte der Messwerte der konventionellen Inertialmesseinheit bestimmt wird.

7. Verfahren nach einem der vorhergehenden Ansprüche, **dadurch gekennzeichnet, dass** die Interrogationszeit automatisch verringert wird, wenn der automatisch bestimmte Parameter oder dessen Betrag einen zweiten Grenzwert überschreitet.

8. Verfahren nach Anspruch 7, **dadurch gekennzeichnet, dass** der zweite Grenzwert anhand des maximal durch ein Fringe-Intervall abdeckbaren Dynamikbereichs bestimmt wird.

9. Computerprogramm mit Programmcodemitteln, die auf einem maschinenlesbaren Träger gespeichert sind, eingerichtet zur Durchführung des Verfahrens nach einem der vorhergehenden Ansprüche, wenn das Computerprogramm auf einem Rechner ausgeführt wird.

10. Vorrichtung zur inertialen sensorischen Messung wenigstens einer Beschleunigung und/oder einer Drehrate, aufweisend eine mechanisch gekoppelte Anordnung aus wenigstens einem Atominterferometer und wenigstens einer konventionellen Inertialmesseinheit, und mit einer Steuereinheit, die zur Durchführung des Verfahrens nach einem der Ansprüche 1 bis 8 eingerichtet ist.

(a)

(b)

Fig. 1

EP 4 269 944 A1

Fig. 2

EP 4 269 944 A1

Fig. 3

(a)

(b)

Fig. 4

Fig. 5

(a)

(b)

Fig. 6

EP 4 269 944 A1

(a)

(b)

Fig. 7

EP 4 269 944 A1

(a)

(b)

Fig. 8

## EUROPÄISCHER RECHERCHENBERICHT

Nummer der Anmeldung

EP 23 16 8480

Europäisches Patentamt
European Patent Office
Office européen des brevets

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | TENNSTEDT BENJAMIN ET AL: "Dedicated Calculation Strategy for Atom Interferometry Sensors in Inertial Navigation", 2020 IEEE/ION POSITION, LOCATION AND NAVIGATION SYMPOSIUM (PLANS), IEEE, 20. April 2020 (2020-04-20), Seiten 755-764, XP033778803, DOI: 10.1109/PLANS46316.2020.9110142 [gefunden am 2020-06-05] * das ganze Dokument * ----- | 1-10 | INV. G01C19/58 G01P15/08 |

**RECHERCHIERTE SACHGEBIETE (IPC)**

G01C
G01P

Der vorliegende Recherchenbericht wurde für alle Patentansprüche erstellt

| Recherchenort | Abschlußdatum der Recherche | Prüfer |
|---|---|---|
| Den Haag | 25. September 2023 | Kuhn, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **C. ANTOINE ; C.J. BORDE.** Quantum theory of atomic clocks and gravito-inertial sensors: an update. *Journal of Optics B: Quantum and Semiclassical Optics,* 2003
- Ein rauscharmes Materiewellen-Gyroskop hoher Genauigkeit. **PETER BERG.** PhD thesis. Gottfried Wilhelm Leibniz Universität, 2014
- **PIERRICK CHEINEY ; LAURIANE FOUCHÉ ; SIMON TEMPLIER ; FABIEN NAPOLITANO ; BAPTISTE BATTELIER ; PHILIPPE BOUYER ; BRYNLE BARRETT.** Navigation-compatible hybrid quantum accelerometer using a kalman filter. *Physical Review Applied,* September 2018, vol. 10 (3
- **A. GAUGUET ; B. CANUEL ; T. LÉVÉQUE ; W. CHAIBI ; A. LANDRAGIN.** Characterization and limits of a cold-atom sagnac interferometer. *Physical Review A,* Dezember 2009, vol. 80 (6
- Senseur inertiel à ondes dè matière aéroporté. **R. GEIGER.** PhD thesis. Univ Paris Sud, 2011

- *iXAtom,* 2017, https:/lwww.coldatomsbordeaux.org/ixatom
- **CHRISOPHER JEKELI.** Navigation error analysis of atom interferometer inertial sensor. *Navigation,* Marz 2005, vol. 52 (1), 1-14
- **L.L. RICHARDSON et al.** Optomechanical resonator-enhanced atom interferometry. *Commun. Phys.,* 2020, vol. 3, 208
- Integration of atom interferometers and inertial measurement units to improve navigation performance. **BENJAMIN TENNSTEDT ; STEFFEN SCHÖN.** 28th Saint Petersburg International Conference on Integrated Navigation Systems (IC/NS). IEEE, 2021
- **BENJAMIN TENNSTEDT ; STEFFEN SCHÖN.** Dedicated calculation strategy for atom interferometry sensors in inertial navigation. IEEE, 2020, 755-764